# EUROPEAN PATENT APPLICATION

(11) **EP 4 793 080 A1**
(43) Date of publication of application: **19.08.2026**
(21) Application number: 26154264.1
(22) Date of filing: 27.01.2026
(51) Int. Cl.: B60K 35/10, B60K 35/28, B60W 30/14, B60W 30/188

(54) **WORK VEHICLE**

(30) Priority: 14.02.2025 JP 2025021951
(71) Applicant: Yanmar Holdings Co., Ltd., Osaka (JP)
(72) Inventor: UENO, So, Okayama (JP)
(74) Representative: Isarpatent

(57) **Abstract**

[Problem] Provided is a technique capable of improving convenience of a work vehicle capable of setting a maximum vehicle speed and a maximum engine rotation speed.

[Solution] An exemplary work vehicle is a work vehicle including a display device. The display device is provided to be capable of displaying a setting confirmation screen on which a maximum vehicle speed display area for displaying a set value of a maximum vehicle speed and a maximum engine rotation speed display area for displaying a set value of a maximum engine rotation speed are displayed side by side. The setting confirmation screen includes a maximum vehicle speed operation area that is displayed side by side with the maximum vehicle speed display area and enables a change of the set value of the maximum vehicle speed, and a maximum engine rotation speed operation area that is displayed side by side with the maximum engine rotation speed display area and enables a change of the set value of the maximum engine rotation speed.

## Description

### TECHNICAL FIELD

The present invention relates to a work vehicle.

### BACKGROUND ART

Patent Document 1 discloses that in a tractor, a target engine revolutions per minute (RPM) when an engine RPM change operation member is operated at the maximum can be set by an engine RPM upper limit setting member. In addition, Patent Document 1 discloses that, in the tractor, a maximum speed value when a main shift operation member is operated at the maximum can be set by a maximum speed setting member.

In addition, Patent Document 1 discloses that the maximum speed setting member and the engine RPM upper limit setting member may be configured by a common member. Further, it is disclosed that an engine rotation/vehicle speed changeover switch and an engine rotation/vehicle speed setting dial are provided to function as both the engine RPM upper limit setting member and the maximum speed setting member in such a case.

### PRIOR ART DOCUMENT

### PATENT DOCUMENT

Patent Document 1: JP-A-2016-21950

### SUMMARY OF INVENTION

### TECHNICAL PROBLEM

Meanwhile, among work vehicles, there is a work vehicle prepared with a plurality of travel modes determined by a combination of an engine RPM upper limit value set by an engine RPM upper limit setting member and a maximum speed value set by a maximum speed setting member. In such a work vehicle, it is necessary to set the engine RPM upper limit value and the maximum speed value for each of the travel modes. In this case, there is a concern that setting work performed by an operation member such as a button or a dial becomes complicated or difficult to understand.

An object of the present invention is to provide a technique capable of improving convenience of a work vehicle capable of setting a maximum vehicle speed and a maximum engine rotation speed.

### SOLUTION TO PROBLEM

An exemplary work vehicle of the present invention is a work vehicle including a display device. The display device is provided to be capable of displaying a setting confirmation screen on which a maximum vehicle speed display area for displaying a set value of a maximum vehicle speed and a maximum engine rotation speed display area for displaying a set value of a maximum engine rotation speed are displayed side by side. The setting confirmation screen includes a maximum vehicle speed operation area that is displayed side by side with the maximum vehicle speed display area and enables a change of the set value of the maximum vehicle speed, and a maximum engine rotation speed operation area that is displayed side by side with the maximum engine rotation speed display area and enables a change of the set value of the maximum engine rotation speed.

### ADVANTAGEOUS EFFECTS OF INVENTION

According to the exemplary invention, it is possible to improve the convenience of the work vehicle capable of setting the maximum vehicle speed and the maximum engine rotation speed.

### BRIEF DESCRIPTION OF DRAWINGS

Fig. 1 is a side view illustrating a schematic configuration of a work vehicle;
Fig. 2 is a diagram for describing a control system included in the work vehicle;
Fig. 3 is a schematic view illustrating a configuration of an instrument panel;
Fig. 4 is a block diagram illustrating functions of a touch panel control unit included in a touch panel;
Fig. 5 is a plan view illustrating a schematic configuration in the periphery of a driver's seat;
Fig. 6 is a perspective view illustrating a schematic configuration of a main shift lever;
Fig. 7 is a schematic view illustrating an example of interruption display on a center display;
Fig. 8 is a view illustrating an example of a screen displayed on a touch panel;
Fig. 9 is a schematic view for describing a screen transition operation on the touch panel;
Fig. 10 is a view illustrating an example of a confirmation screen displayed before execution of A/B automatic switching;
Fig. 11 is a view illustrating a setting confirmation screen according to a modification displayed on the touch panel; and
Fig. 12 is a view illustrating a configuration of a re-confirmation screen displayed when it is selected not to perform speed increase confirmation.

### DESCRIPTION OF EMBODIMENTS

Embodiments of the present invention will be described with reference to the drawings. Note that, in the drawings, the same or equivalent elements are denoted by the same reference signs, and the description thereof will not be repeated in a case where there is no particular need for description.

In the present specification, directions are defined as follows. First, a direction in which a work vehicle travels straight is defined as a front-rear direction, and front and rear are defined with a side where a steering wheel is located with respect to a driver's seat of the work vehicle is defined as a front side to define "front" and "rear". In addition, a right side and a left side when viewed from an operator sitting on the driver's seat facing the front side are defined as "right" and "left" to define a left-right direction orthogonal to the front-rear direction. In addition, a direction orthogonal to the front-rear direction and the left-right direction is defined as an up-down direction, the gravity direction is defined as a downward direction, and the opposite side thereof is defined as an upward direction to define "up" and "down". The above directions are names used merely for description, and are not intended to limit the actual positional relationships and directions.

### <1. Outline of work vehicle>

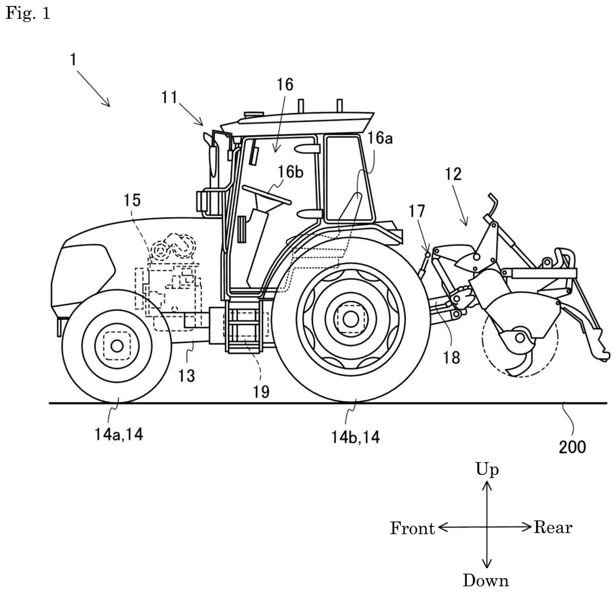

Fig. 1 is a side view illustrating a schematic configuration of a work vehicle 1 according to an embodiment of the present invention. Fig. 1 is a left side view in detail. As illustrated in Fig. 1, the work vehicle 1 includes a vehicle body 11 and a work implement 12.

The vehicle body 11 constitutes a main part of the work vehicle 1 and can travel in a work site 200. The work implement 12 is provided in the work vehicle 1 by being attached to the vehicle body 11. The work vehicle 1 travels while working using the work implement 12. The work vehicle 1 travels while working in the work site 200. In the present embodiment, the work site 200 is, for example, a farm field. That is, the work vehicle 1 is a farm field work vehicle that performs ground work in the farm field 200.

Note that the work vehicle 1 may travel on a road, such as a public road, in order to move locations other than the work site 200. That is, the place where the work vehicle 1 travels is not limited to the work site 200.

In addition, the work implement 12 is attached to a rear portion of the vehicle body 11 in the present embodiment. The work vehicle 1 is a tractor that tows the work implement 12 using the vehicle body 11. However, the work implement 12 may be configured to be attached to a front portion of the vehicle body 11. That is, the work vehicle of the present invention may be configured to include the work implement in the front portion of the vehicle body. The work vehicle of the present invention may be a work vehicle for agricultural work other than a tractor, a work vehicle for civil engineering work or construction work, or the like.

The vehicle body 11 includes a base 13 and a pair of left and right traveling units 14 that support the base 13 and are arranged to be spaced apart from each other in the left-right direction. Each of the left and right traveling units 14 includes a front wheel 14a and a rear wheel 14b. That is, the front wheels 14a include a left front wheel 14a and a right front wheel 14a. In addition, the rear wheels 14b include a left rear wheel 14b and a right rear wheel 14b.

The front wheels 14a and the rear wheels 14b are provided so as to be able to transmit power from an engine 15 arranged in front of the base 13. Power is transmitted from the engine 15 to the front wheels 14a and the rear wheels 14b, so that the vehicle body 11 can travel in the farm field 200 and the like. Note that the engine 15 is a diesel engine in the present embodiment, but is not limited thereto, and the engine 15 may be a gasoline engine, a hydrogen gas engine, or the like.

The base 13 is provided with a cab 16 on which the operator (a user) boards. The cab 16 is arranged behind the engine 15. The cab 16 includes a driver's seat 16a on which the operator sits, a steering wheel 16b that is arranged in front of the driver's seat 16a and enables the operator to steer the work vehicle 1, and a plurality of operation tools (not illustrated in Fig. 1) that enable the operator to perform various operations.

Note that examples of the plurality of operation tools include a main shift lever and an auxiliary shift lever. The main shift lever is an operation tool for steplessly changing (freely changing) the traveling speed of the work vehicle 1. The auxiliary shift lever is, for example, an operation tool for instructing either one of two levels of speed, that is, a low-speed side and a high-speed side. The operator designates a rough speed with the auxiliary shift lever, and then designates a fine speed with the main shift lever. In addition, the plurality of operation tools include an accelerator operation member (a pedal, a lever, or the like) that enables an operation of changing the rotation speed of the engine 15.

The work implement 12 is coupled to a rear portion of the base 13 via a coupling mechanism 17. In the present embodiment, the work implement 12 is connected to the base 13 so as to be movable up and down. A PTO shaft 18 for outputting power generated by the engine 15 to the work implement 12 is arranged at the rear portion of the base 13. The power of the engine 15 is transmitted to the PTO shaft 18 via a transmission 19. Note that a power source for driving the work implement 12 may be provided separately from the engine 15 configured to cause the vehicle body 11 to travel. The separately provided power source may be a motor or the like.

In the present embodiment, the work implement 12 is a rotary tiller. The ground work performed by the work vehicle 1 is tilling work. However, the work implement 12 is not limited to the rotary tiller, and may be a plow, a harvesting machine, a harrowing work implement (drive harrow), a chemical applicator, a fertilizing machine, or the like. In addition, the work vehicle 1 may be provided to enable replacement of a plurality of types of the work implements 12.

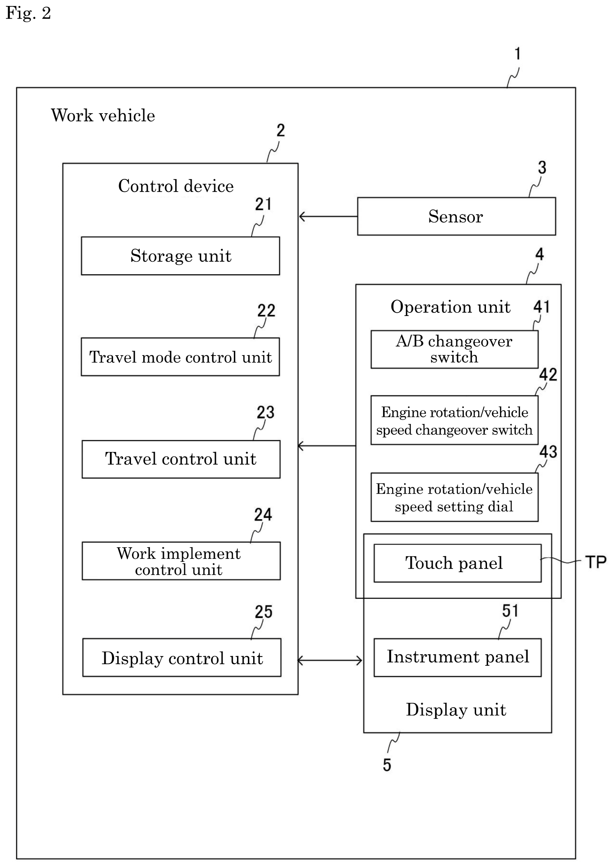

Fig. 2 is a diagram for describing a control system included in the work vehicle 1 according to the embodiment of the present invention. Note that components necessary for describing features of the work vehicle 1 according to the embodiment of the present invention are illustrated in Fig. 2, and description of other general components and the like is omitted. As illustrated in Fig. 2, the work vehicle 1 includes a control device 2.

The control device 2 is, for example, a computer device including a calculation unit, an input/output unit (not illustrated), and a storage unit 21. The calculation unit is, for example, an integrated circuit such as a processor or a microprocessor. The storage unit 21 is a main storage device such as a read only memory (ROM) and a random access memory (RAM). The storage unit 21 may further include an auxiliary storage device such as a hard disk drive (HDD) or a solid state drive (SSD). The storage unit 21 stores various types of programs, data, and the like. The calculation unit reads various programs from the storage unit 21 and executes arithmetic processing according to the programs.

In the present embodiment, the control device 2 can operate as various functional units by cooperation of the above-described hardware and software. As illustrated in Fig. 2, the various functional units include a travel mode control unit 22, a travel control unit 23, a work implement control unit 24, and a display control unit 25. Details of the functional units 22 to 25 will be described later.

In the present embodiment, each of the functional units 22 to 25 included in the control device 2 is implemented by the calculation unit executing arithmetic processing according to a program, that is, by software. However, this is an example, and the functions of the functional units may be implemented by another method. At least some of the functional units 22 to 25 may be implemented by using, for example, an application specific integrated circuit (ASIC), a field programmable gate array (FPGA), or the like. That is, at least some of the functional units 22 to 25 may be implemented by hardware using a dedicated IC or the like. In addition, at least some of the functional units 22 to 25 may be implemented by using software and hardware in combination. In addition, each of the functional units 22 to 25 is a conceptual component. A function performed by one component may be distributed to a plurality of components. In addition, functions of a plurality of components may be integrated into one component.

In addition, the control device 2 may include one piece of hardware or may include plural pieces of hardware capable of communicating with each other. For example, the work vehicle 1 may include a remote operation device (not illustrated) that enables a remote operation by the operator at a position away from the vehicle body 11. In such a case, the control device 2 may be arranged only on the vehicle body 11, or may be arranged separately on the vehicle body 11 side and the remote operation device side. Note that the remote operation device is a device provided so as to be capable of communicating with the vehicle body 11, and may be, for example, a tablet terminal, a smartphone, a notebook computer, a proportional control system, or the like.

In addition, the control device 2 may be provided so as to be capable of communicating with a server device via a network such as the Internet. In such a case, some functions of the control device 2 may be implemented by the server device. In addition, a part of information stored in the storage unit 21 may be stored in the server device.

As illustrated in Fig. 2, the work vehicle 1 includes not only the control device 2 but also elements 3 to 5 directly or indirectly connected to the control device 2. These elements 3 to 5 and the control device 2 may be connected in a wired or wireless manner, for example. In addition, these elements 3 to 5 may be connected to a device (the remote operation device, the server device, or the like) capable of communicating with the control device 2 in a wired or wireless manner, and may be indirectly connected to the control device 2 via the device capable of communicating.

A sensor 3 detects information relating to the work vehicle 1, and outputs the detected information to the control device 2. Specifically, a plurality of types of the sensors 3 are mounted on the work vehicle 1. Each of the plurality of types of sensors 3 outputs the detected information to the control device 2. The sensor 3 is mounted on, for example, the vehicle body 11 or the work implement 12. In some cases, the sensor 3 may be provided in a device (such as the remote operation device described above) available at a position away from the vehicle body 11. Examples of the plurality of types of sensors 3 include a speed sensor that detects the speed of the work vehicle 1, a steering angle sensor that detects a steering angle of steering using the steering wheel 16b, a global navigation satellite system (GNSS) sensor that detects a position of the work vehicle 1, a sensor that detects the rotation speed of the engine 15, an operation position detection sensor that detects an operation position of the accelerator operation member, and a lever position sensor that detects a lever position of the main shift lever or the auxiliary shift lever.

An operation unit 4 enables the operator to issue an instruction to the control device 2. In the present embodiment, the operation unit 4 includes a plurality of operation devices. The operation unit 4 is provided, for example, in the vehicle body 11. However, in a case where the work vehicle 1 includes the remote operation device, at least some of the operation devices constituting the operation unit 4 may be included in the remote operation device. The operation unit 4 may be, for example, a button, a lever, a dial, a touch panel, or the like.

As illustrated in Fig. 2, the operation unit 4 includes a touch panel TP in the present embodiment. Note that the touch panel TP is also included in a display unit 5 in order to have both functions of an input device and a display device. Details of the touch panel TP will be described later. In the present embodiment, the operation unit 4 includes an A/B changeover switch 41, an engine rotation/vehicle speed changeover switch 42, and an engine rotation/vehicle speed setting dial 43. Details of the A/B changeover switch 41, the engine rotation/vehicle speed changeover switch 42, and the engine rotation/vehicle speed setting dial 43 will also be described later.

The display unit 5 appropriately displays information in accordance with an instruction from the control device 2. In the present embodiment, the display unit 5 includes a plurality of display devices. The display unit 5 is provided, for example, in the vehicle body 11. However, in a case where the work vehicle 1 includes the remote operation device, at least some of the display devices constituting the display unit 5 may be included in the remote operation device.

In the present embodiment, the display unit 5 includes an instrument panel 51 and the touch panel TP.

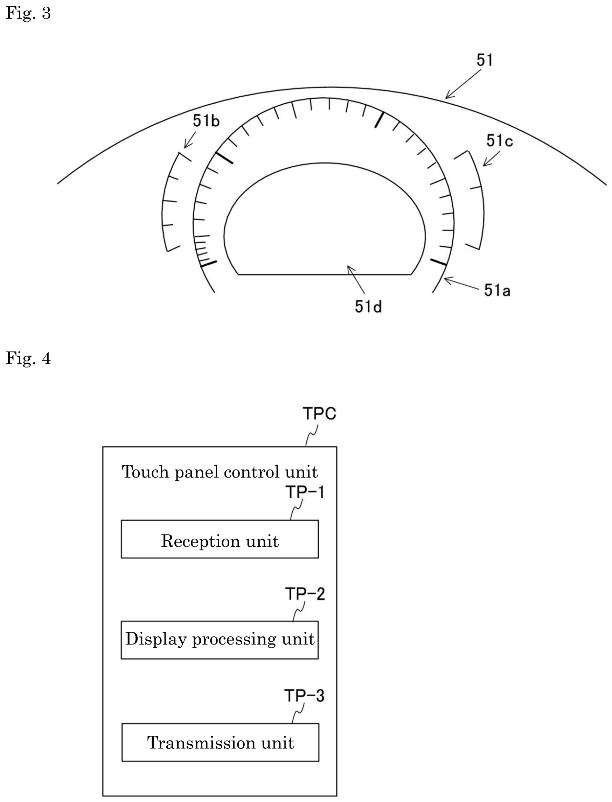

Fig. 3 is a schematic view illustrating a configuration of the instrument panel 51. The instrument panel 51 is provided in front of the steering wheel 16b of the cab 16. As illustrated in Fig. 3, display information of the instrument panel 51 includes a speedometer 51a, a fuel gauge 51b, and a water temperature gauge 51c. In addition, the instrument panel 51 includes a center display 51d configured using a liquid crystal display or the like. The center display 51d displays various types of information relating to the work vehicle 1. For example, the center display 51d displays an engine load factor, an hour meter, a trip meter, and the like. In addition, interruption display of set values of a maximum vehicle speed and a maximum engine rotation speed of the work vehicle 1 are performed on the center display 51d. This point will be described later.

The touch panel TP is arranged, for example, in the periphery of the driver's seat 16a. The operator can confirm and input various settings relating to the work vehicle 1 using the touch panel TP. In the present embodiment, the set values of the maximum vehicle speed and the maximum engine rotation speed (maximum engine RPM) of the work vehicle 1 can be displayed or changed using the touch panel TP. This point will be described later in detail.

Fig. 4 is a block diagram illustrating functions of a touch panel control unit TPC included in the touch panel TP. Note that the touch panel control unit TPC is a computer device including a calculation unit including a processor or the like. The functions of the touch panel control unit TPC are implemented by the processor executing arithmetic processing according to a program. As illustrated in Fig. 4, the touch panel control unit TPC includes a reception unit TP-1, a display processing unit TP-2, and a transmission unit TP-3 as functional units.

The reception unit TP-1 receives a touch operation of the operator on the touch panel TP. The display processing unit TP-2 performs display processing according to the touch operation of the operator and display processing according to an instruction from the control device 2. The transmission unit TP-3 transmits, to the control device 2, content (instruction information) of the instruction by the touch operation of the operator.

Note that the touch panel TP may be installed in the vehicle body 11, or may be incorporated in a portable device that can be brought into the vehicle body 11 and taken out from the vehicle body 11. The portable device may be, for example, the remote operation device described above. In addition, the functions implemented by the touch panel TP of the present embodiment may be implemented by a combination of an input device and a display device that are separately configured.

Referring back to Fig. 2, an outline of the functions of the control device 2 will be described.

The travel mode control unit 22 performs control processing relating to a plurality of travel modes including mutually different combinations of the set value of the maximum vehicle speed of the work vehicle 1 and the set value of the maximum engine rotation speed. Specifically, the travel mode control unit 22 controls switching of the plurality of travel modes. In other words, the work vehicle 1 is provided so as to be able to set the plurality of travel modes in which combinations of the set value of the maximum vehicle speed and the set value of the maximum engine rotation speed are different from each other. The travel mode control unit 22 executes processing of switching the travel mode according to an instruction from the operator or automatically when automatic switching is set.

In the present embodiment, the plurality of travel modes include an A mode (first mode) and a B mode (second mode). For example, the operator can use the A mode as a mode used at the time of work and the B mode as a mode used at the time of turning, or use the A mode as a mode used at the time of rotary work and the B mode as a mode used at the time of plowing work. The travel mode control unit 22 executes processing of switching from the A mode to the B mode and processing of switching from the B mode to the A mode according to an instruction from the operator or automatically.

The travel control unit 23 controls a travel system of the work vehicle 1. For example, the travel control unit 23 controls traveling of the work vehicle 1 in accordance with the travel mode determined by the control operation of the travel mode control unit 22.

The travel control unit 23 controls the operation of the transmission 19 such that the speed (vehicle speed) of the work vehicle 1 becomes a speed corresponding to an operation position of the main shift lever. At this time, the travel control unit 23 controls the operation such that a vehicle speed when the main shift lever is operated at the maximum is limited to a maximum vehicle speed corresponding to the set travel mode. In addition, the travel control unit 23 controls the operation of the engine 15 such that an output rotation speed (output RPM) of the engine 15 becomes a rotation speed corresponding to an operation position of the accelerator operation member. At this time, the travel control unit 23 controls the operation such that a target engine rotation speed (target engine RPM) when the accelerator operation member is operated at the maximum is limited to a maximum engine rotation speed (maximum engine RPM) corresponding to the set travel mode.

Note that instruction information such as the speed and steering used by the travel control unit 23 may be obtained as the operator operates (manually operates) the operation tools (the steering wheel, levers, pedals, and the like) provided in the cab 16. However, in a case where the work vehicle 1 has an autonomous traveling function, the instruction information such as the speed and steering used by the travel control unit 23 may be information obtained by calculation performed by the control device 2 using information obtained from the sensor 3.

The work implement control unit 24 controls a working system of the work vehicle 1 in accordance with input operation information relating to the work implement 12. Examples of the control on the working system include lifting/lowering control of the work implement 12 and switching control of power transmission with respect to the work implement 12 using a PTO power transmission unit. Note that the operation information relating to the work implement 12 may be obtained as the operator operates (manually operates) the operation tools (levers, pedals, and the like) provided in the cab 16. However, in a case where the work vehicle 1 has an autonomous traveling function including automatic control of the work implement 12, the operation information relating to the work implement 12 may be information obtained by the control device 2 based on information from the sensor 3.

The display control unit 25 controls the display unit 5 according to information obtained from the sensor 3 and the operation unit 4, information obtained from the other control units 22 to 24, and the like. Specifically, the display control unit 25 performs display control of the instrument panel 51 and display control of the touch panel TP.

### <2. Settings of maximum vehicle speed and maximum engine rotation speed>

Next, matters relating to settings of a maximum vehicle speed and a maximum engine rotation speed in the work vehicle 1 of the present embodiment will be described in detail. In the present embodiment, the maximum vehicle speed and the maximum engine rotation speed can be set using a display device included in the work vehicle 1 and an operation member arranged on the side of the driver's seat 16a of the work vehicle 1. Hereinafter, these will be described in order.

### [2-1. Configuration using operation member]

As described above, the work vehicle 1 of the present embodiment is provided such that a set value of the maximum vehicle speed and a set value of the maximum engine rotation speed can be changed using the operation member. Specifically, the operation member includes a plurality of operation members. The plurality of operation members include the A/B changeover switch 41, the engine rotation/vehicle speed changeover switch 42, and the engine rotation/vehicle speed setting dial 43 (see Fig. 2).

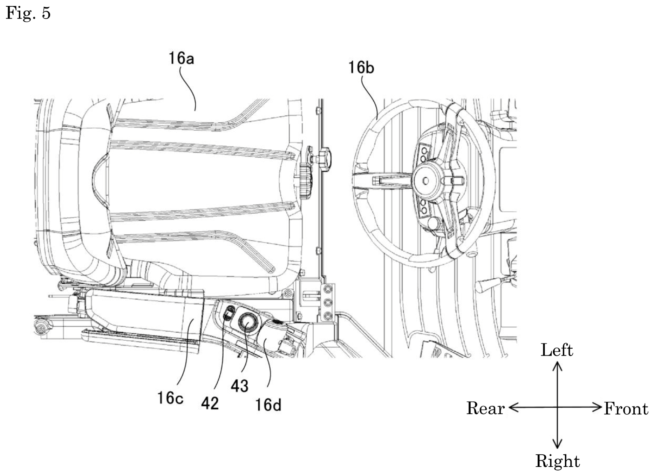

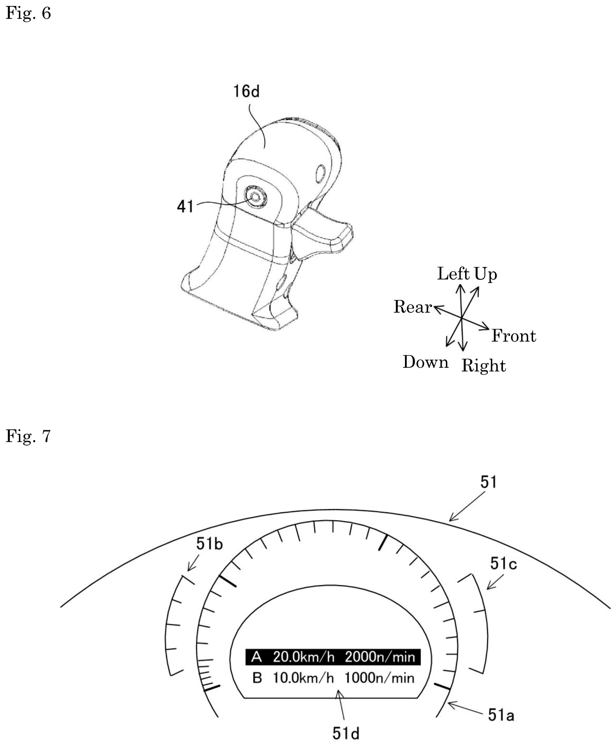

Fig. 5 is a plan view illustrating a schematic configuration in the periphery of the driver's seat 16a. As illustrated in Fig. 5, an armrest 16c is provided on the right side of the driver's seat 16a. A main shift lever 16d is provided at a front end of the armrest 16c. Fig. 6 is a perspective view illustrating a schematic configuration of the main shift lever 16d.

As illustrated in Figs. 5 and 6, the A/B changeover switch 41 is provided on a right side surface of the main shift lever 16d. The engine rotation/vehicle speed changeover switch 42 and the engine rotation/vehicle speed setting dial 43 are provided on an upper surface of a front portion of the armrest 16c. The engine rotation/vehicle speed changeover switch 42 and the engine rotation/vehicle speed setting dial 43 are arranged at the rear of the main shift lever 16d to be aligned in the front-rear direction with the engine rotation/vehicle speed setting dial 43 at the front and the engine rotation/vehicle speed changeover switch 42 at the rear. As can be seen from Figs. 5 and 6, the operation members 41 to 43 capable of changing the set value of the maximum vehicle speed and the set value of the maximum engine rotation speed are arranged on the side (specifically, the right side) of the driver's seat 16a. The operation members 41 to 43 capable of changing the set value of the maximum vehicle speed and the set value of the maximum engine rotation speed are provided at positions where the operation members can be easily operated even during driving of the work vehicle 1.

The A/B changeover switch 41 is a button type switch (push switch) that enables switching between the A mode and the B mode by being pressed in the left-right direction. When the A/B changeover switch 41 is pressed in a state where a travel mode of the work vehicle 1 is set to the A mode, switching from the A mode to the B mode is performed by the travel mode control unit 22. In addition, when the A/B changeover switch 41 is pressed in a state where the travel mode of the work vehicle 1 is set to the B mode, switching from the B mode to the A mode is performed by the travel mode control unit 22.

The engine rotation/vehicle speed changeover switch 42 is a rocker switch that enables selection of the set value of either the engine rotation speed or the vehicle speed to be changed. The set value of the maximum vehicle speed can be changed when the engine rotation/vehicle speed changeover switch 42 is tilted to one side in the left-right direction, and the set value of the maximum engine rotation speed can be changed when the engine rotation/vehicle speed changeover switch 42 is tilted to the other side in the left-right direction.

The engine rotation/vehicle speed setting dial 43 is a dial type operation member for adjusting the engine rotation speed or the vehicle speed to a target upper limit value. The set value can be changed by rotating the engine rotation/vehicle speed setting dial 43. For example, the upper limit value to be set can be increased by rotating the engine rotation/vehicle speed setting dial 43 in the clockwise direction, and the upper limit value to be set can be decreased by rotating the engine rotation/vehicle speed setting dial 43 in the counterclockwise direction. Note that an upper limit value of the engine rotation speed corresponds to the above-described maximum engine rotation speed, and an upper limit value of the vehicle speed corresponds to the above-described maximum vehicle speed.

Specifically, the engine rotation/vehicle speed setting dial 43 enables a change of an upper limit value on a side selected as a change target by the engine rotation/vehicle speed changeover switch 42 between the engine rotation speed and the vehicle speed of the travel mode selected by the A/B changeover switch 41. For example, when the B mode is selected by the A/B changeover switch 41 and the engine rotation speed is selected as a change target by the engine rotation/vehicle speed changeover switch 42, the upper limit value (maximum engine rotation speed) of the engine rotation speed of the B mode can be changed by rotating the engine rotation/vehicle speed setting dial 43.

In the present embodiment, when any one of the three operation members 41 to 43 is operated, interruption display of the set values of the maximum vehicle speed and the maximum engine rotation speed is performed on the center display 51d (see Fig. 3) included in the instrument panel 51. Here, the interruption display refers to display that temporarily appears instead of normal display. If a state where none of the plurality of operation members 41 to 43 is operated continues for a certain time or more when the interruption display is performed, the interruption display is ended. When the interruption display is ended, the display of the center display 51d returns to the normal display state (normal display).

Fig. 7 is a schematic view illustrating the interruption display on the center display 51d. In Fig. 7, "A" indicates the A mode, and "B" indicates the B mode. Next to "A" and "B" aligned up and down, a set value of the maximum vehicle speed and a set value of the maximum engine rotation speed are arranged in order from the left side. The set values arranged next to "A" are set values of the maximum vehicle speed and the maximum engine rotation speed currently set in the A mode. The set values arranged next to "B" are set values of the maximum vehicle speed and the maximum engine rotation speed currently set in the B mode.

In the interruption display on the center display 51d, a mode (travel mode) on side currently selected in the work vehicle 1 out of the A mode and the B mode is displayed in the form of white characters on a black background. On the other hand, out of the A mode and the B mode, a mode on a side that is not currently selected in the work vehicle 1 is displayed in the form of black characters on a white background. Note that the display in such a form is an example, and another display may be used as long as the operator can easily recognize the mode on the currently selected side. In the present embodiment, in consideration of the fact that a background color of the center display 51d is white, the mode on the currently selected side is displayed in the form of white characters on the black background such that the mode on the currently selected side is made conspicuous.

In the example illustrated in Fig. 7, the operator can recognize that the A mode is currently selected by viewing the center display 51d. In a state where the A mode is selected, the operator tilts the engine rotation/vehicle speed changeover switch 42 to one side in the left-right direction to select the vehicle speed as a change target. As a result, the operator can change the maximum vehicle speed of the A mode from 20 km/h to another value by rotating the engine rotation/vehicle speed setting dial 43. Since the change in the set value of the maximum vehicle speed is reflected on the center display 51d, the operator can set a target maximum vehicle speed while viewing the center display 51d. In addition, in a state where the A mode is selected, the operator tilts the engine rotation/vehicle speed changeover switch 42 to the other side in the left-right direction to select the engine rotation speed as a change target. As a result, the operator can change the maximum engine rotation speed in the A mode from 2000 n/min to another value by rotating the engine rotation/vehicle speed setting dial 43. Since the change in the set value of the maximum engine rotation speed is reflected on the center display 51d, the operator can set a target maximum engine rotation speed while viewing the center display 51d.

When the operator presses the A/B changeover switch 41 in a state where the A mode is selected, the travel mode is switched to the B mode. As a result, the B mode is displayed in the form of white characters on the black background. On the other hand, the A mode is displayed in the form of black characters on the white background. In this state, the operator tilts the engine rotation/vehicle speed changeover switch 42 to one side in the left-right direction to select the vehicle speed as a change target. As a result, the operator can change the maximum vehicle speed in the B mode from 10 km/h to another value by rotating the engine rotation/vehicle speed setting dial 43. In addition, in a state where the B mode is selected, the operator tilts the engine rotation/vehicle speed changeover switch 42 to the other side in the left-right direction to select the maximum engine rotation speed as a change target. As a result, the operator can change the maximum engine rotation speed in the B mode from 1000 n/min to another value by rotating the engine rotation/vehicle speed setting dial 43.

As can be seen from the above description, changing the set values of the maximum vehicle speed and the maximum engine rotation speed using the operation members 41 to 43 may increase the number of operations required to change the settings. For example, it is assumed that the A mode is selected and a change of the vehicle speed is selected in the engine rotation/vehicle speed changeover switch 42. In this case, in order to change the set value of the maximum engine rotation speed in the B mode, it is necessary to operate all of the A/B changeover switch 41, the engine rotation/vehicle speed changeover switch 42, and the engine rotation/vehicle speed setting dial 43. For this reason, the operator may find the operation cumbersome or difficult to understand. In consideration of such a point, the settings of the maximum vehicle speed and the maximum engine rotation speed can be changed using not only the operation members 41 to 43 but also the display device in the present embodiment.

### [2-2. Configuration using display device]

In the present embodiment, the display device capable of changing the settings of the maximum vehicle speed and the maximum engine rotation speed is the touch panel TP (see Fig. 2). However, the display device capable of changing the settings of the maximum vehicle speed and the maximum engine rotation speed does not require an input function by a touch operation when an operation device (input device) that enables a screen operation on the display device by a method other than the touch operation is separately prepared. That is, the display device capable of changing the settings of the maximum vehicle speed and the maximum engine rotation speed may be configured using a device other than the touch panel.

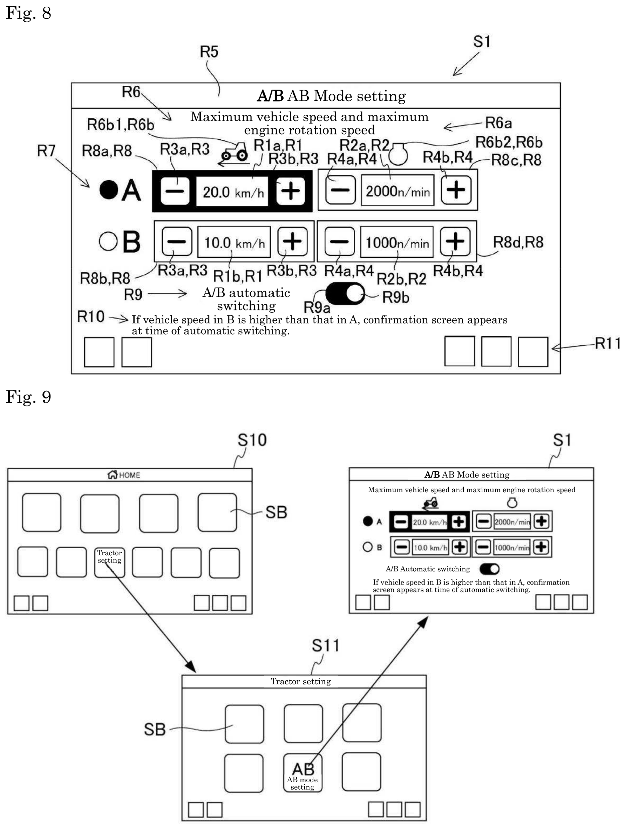

Fig. 8 is a view illustrating an example of a screen displayed on the touch panel TP. As illustrated in Fig. 8, the touch panel TP (display device) is provided so as to be capable of displaying a setting confirmation screen S1 in which a maximum vehicle speed display area R1 for displaying a set value of the maximum vehicle speed and a maximum engine rotation speed display area R2 for displaying a set value of the maximum engine rotation speed are displayed side by side.

In addition, the setting confirmation screen S1 includes a maximum vehicle speed operation area R3 that is displayed side by side with the maximum vehicle speed display area R1 and enables a change of the set value of the maximum vehicle speed, and a maximum engine rotation speed operation area R4 that is displayed side by side with the maximum engine rotation speed display area R2 and enables a change of the set value of the maximum engine rotation speed.

With this configuration, since the single screen S1 on which the set values of the maximum vehicle speed and the maximum engine rotation speed can be confirmed is displayed, the operator can easily change the set values of the maximum vehicle speed and the maximum engine rotation speed using the screen S1. Further, since the operation areas R3 and R4 for changing the set values are arranged side by side with the display areas R1 and R2 of the set values, respectively, the operator can intuitively execute the operation of changing the set values of the maximum vehicle speed and the maximum engine rotation speed. That is, according to the configuration of the present embodiment, it is possible to improve the convenience of the work vehicle 1 capable of setting the maximum vehicle speed and the maximum engine rotation speed.

Specifically, in the setting confirmation screen S1, the maximum vehicle speed display area R1, the maximum engine rotation speed display area R2, the maximum vehicle speed operation area R3, and the maximum engine rotation speed operation area R4 are displayed for each of the plurality of travel modes. With such a configuration, the set values of the maximum vehicle speed and the maximum engine rotation speed that need to be set for each travel mode can be collectively set only by displaying the single screen S1, so that the burden on the operator at the time of setting can be reduced.

In the present embodiment, a setting method using the operation members 41 to 43 and a setting method using the touch panel TP can be selectively used for setting the maximum vehicle speed and the maximum engine rotation speed. The work vehicle 1 may include only a configuration using the touch panel TP that enables an easy setting operation. However, if the setting method using the operation members 41 to 43 can be used as in the present embodiment, the method using the operation members 41 to 43 can be used in a case where the setting operation using the touch panel TP is difficult, for example, in a case where attention to the front of the work vehicle 1 is required. That is, with the configuration as in the present embodiment, the convenience of the setting operation of the maximum vehicle speed and the maximum engine rotation speed can be improved.

In addition, in the present embodiment, the setting confirmation screen S1 is provided so as to be displayable by a screen transition operation on the touch panel TP. Fig. 9 is a schematic view for describing the screen transition operation on the touch panel TP. An example illustrated in Fig. 9 is an example on the assumption that a home screen S10 is displayed first.

The operator performs a touch operation on a software button SB linked to the settings of the maximum vehicle speed and the maximum engine rotation speed from among a plurality of software buttons SB displayed on the home screen S10. As a result, a tractor setting screen S11 is displayed. When the tractor setting screen S11 is displayed, the operator performs a touch operation on a software button SB linked to the settings of the maximum vehicle speed and the maximum engine rotation speed from among a plurality of software buttons SB displayed on the tractor setting screen S11. As a result, the setting confirmation screen S1 (specifically, an AB mode setting screen) enabling the settings of the maximum vehicle speed and the maximum engine rotation speed is displayed.

In such a configuration, it is possible to easily reach the intended setting confirmation screen S1 by performing an intuitive operation while viewing icons displayed together with the software buttons SB on the screen. In the example illustrated in Fig. 9, the setting confirmation screen S1 is reached from the home screen S10 via another screen S11, but this is merely an example. The setting confirmation screen S1 may be reached only by performing a touch operation on the home screen S10 once, or the setting confirmation screen S1 may be reached from the home screen S10 via a plurality of screens.

In addition, the work vehicle 1 of the present embodiment includes operation members that cause the setting confirmation screen S1 to be displayed, in addition to the screen transition operation on the touch panel TP. Specifically, the operation members are the A/B changeover switch 41, the engine rotation/vehicle speed changeover switch 42, and the engine rotation/vehicle speed setting dial 43 described above. When any one of the operation members 41 to 43 is operated, not only the interruption display on the center display 51d but also the setting confirmation screen S1 is displayed on the touch panel TP. With such a configuration, it is possible to quickly display the setting confirmation screen S1 by using the operation members 41 to 43 as pseudo shortcut buttons for screen transition.

In the present embodiment, specifically, the setting confirmation screen S1 can be displayed only when the display settings of the maximum vehicle speed and the maximum engine rotation speed are enabled in display settings on the touch panel TP. That is, it is a precondition that the display settings of the maximum vehicle speed and the maximum engine rotation speed are enabled for displaying the set values of the maximum vehicle speed and the maximum engine rotation speed on the screen of the touch panel TP. However, this is merely an example, and the setting confirmation screen S1 may be provided so as to be always displayable without providing such a valid/invalid switching setting.

In addition, in the present embodiment, in a case where there is no operation on the operation members 41 to 43 and the touch panel TP for a predetermined time or more after the setting confirmation screen S1 is displayed, the touch panel TP displays a screen displayed before (specifically, immediately before) the setting confirmation screen S1. In such a configuration, for example, when the operator confirms that it is not necessary to change the settings of the maximum vehicle speed and the like after the display of the setting confirmation screen S1, or after a setting change by the operator is completed, the screen can be automatically returned to the screen (original screen) displayed immediately before. As one of situations where an operation of displaying the setting confirmation screen S1 is performed, a case where the work vehicle 1 is executing work is assumed. Therefore, according to the configuration of the present embodiment, the screen is automatically returned to the screen previously used for work after the display of the setting confirmation screen S1, which is convenient. Examples of the screen previously used for work include a screen displayed during execution of automatic steering.

In addition, in the present embodiment, when any one of the A/B changeover switch 41, the engine rotation/vehicle speed changeover switch 42, the engine rotation/vehicle speed setting dial 43, and the touch panel TP is operated within the predetermined time after the setting confirmation screen S1 is displayed, a display time of the setting confirmation screen S1 is extended. With such a configuration, it is possible to give the operator who has changed a set value a time for confirming the changed set value.

Here, details of the setting confirmation screen S1 will be described with reference to Fig. 8. In description of the setting confirmation screen S1, terms "up", "down", "left", and "right" are used with reference to the setting confirmation screen S1 illustrated in Fig. 8. "Up", "down", "left", or "right" used in the description of the setting confirmation screen S1 and "up", "down", "left", or "right" defined above for the overall description of the work vehicle 1 do not necessarily indicate the same direction.

As illustrated in Fig. 8, the setting confirmation screen S1 includes an area for display in addition to the maximum vehicle speed display area R1, the maximum engine rotation speed display area R2, the maximum vehicle speed operation area R3, and the maximum engine rotation speed operation area R4. The setting confirmation screen S1 further includes a title display area R5, a setting content description area R6, an AB mode display area R7, a setting target display area R8, an A/B automatic switching selection area R9, a caution display area R10, and a screen switching icon display area R11.

The title display area R5 is provided as an area for displaying a title determined such that the operator can easily grasp the content of a screen being selected. The title display area R5 has a horizontally long rectangular shape, and is provided at an upper end portion of a rectangular screen. In the example illustrated in Fig. 8, "AB mode setting" is displayed as a title in the title display area R5 of the setting confirmation screen S1.

The setting content description area R6 is an area for specifically displaying the content of a setting item displayed on the setting confirmation screen S1. The setting content description area R6 is provided below the title display area R5. Specifically, the setting content description area R6 includes a character display area R6a indicating that setting items are the maximum vehicle speed and the maximum engine rotation speed, and an icon display area R6b. The icon display area R6b includes an area in which a first icon R6b1 representing the setting of the maximum vehicle speed is displayed and an area in which the second icon R6b2 representing the setting of the maximum engine rotation speed is displayed. The first icon R6b1 and the second icon R6b2 are displayed with a spacing in the left-right direction with the first icon R6b1 on the left and the second icon R6b2 on the right.

The AB mode display area R7 is an area for displaying whether a travel mode being selected is the A mode or the B mode. The AB mode display area R7 is arranged below the setting content description area R6 and near a left end of the screen. In the AB mode display area R7, character "A" and character "B" are displayed to be aligned up and down with the character "A" on the upper side and the character "B" on the lower side. In the AB mode display area R7, a circle is displayed on the left side of each of the characters "A" and "B". A display mode of the circles varies depending on which of the A mode and the B mode is selected as the travel mode.

When the A mode is selected as the travel mode, the circle on the left side of the character "A" is filled, and the circle on the left side of the character "B" is not filled. When the B mode is selected as the travel mode, the circle on the left side of the character "A" is not filled, and the circle on the left side of the character "B" is filled. In the example illustrated in Fig. 8, the circle on the left side of the character "A" is filled. That is, Fig. 8 illustrates the setting confirmation screen S1 when the A mode is selected as the travel mode. Note that the AB mode display area R7 may be an area in which the A mode or the B mode can be selected by a touch operation.

The setting target display area R8 is an area for notifying the operator of an item selected as a target of a set value change operation using the engine rotation/vehicle speed setting dial 43. The setting target display area R8 is provided in association with the maximum vehicle speed display area R1, the maximum engine rotation speed display area R2, the maximum vehicle speed operation area R3, and the maximum engine rotation speed operation area R4. Therefore, details of the maximum vehicle speed display area R1, the maximum engine rotation speed display area R2, the maximum vehicle speed operation area R3, and the maximum engine rotation speed operation area R4 will be described before describing details of the setting target display area R8.

The maximum vehicle speed display area R1 is an area having a horizontally long rectangular shape. Specifically, the maximum vehicle speed display areas R1 include a first maximum vehicle speed display area R1a for displaying the maximum vehicle speed for the A mode and a second maximum vehicle speed display area R1b for displaying the maximum vehicle speed for the B mode. The first maximum vehicle speed display area R1a is arranged on the right side of the character "A" in the AB mode display area R7 and below the first icon R6b1 representing the setting of the maximum vehicle speed. The second maximum vehicle speed display area R1b is arranged on the right side of the character "B" in the AB mode display area R7 and below the first icon R6b1. With such an arrangement, the operator can easily recognize which set value a displayed set value is by using the characters "A" and "B" and the first icon R6b1 as marks. Note that the second maximum vehicle speed display area R1b is arranged below the first maximum vehicle speed display area R1a.

The maximum engine rotation speed display area R2 is an area having a horizontally long rectangular shape. Specifically, the maximum engine rotation speed display areas R2 include a first maximum engine rotation speed display area R2a for displaying the maximum engine rotation speed for the A mode and a second maximum engine rotation speed display area R2b for displaying the maximum engine rotation speed for the B mode. The first maximum engine rotation speed display area R2a is arranged on the right side of the character "A" in the AB mode display area R7 and below the second icon R6b2 representing the setting of the maximum engine rotation speed. The second maximum engine rotation speed display area R2b is arranged on the right side of the character "B" in the AB mode display area R7 and below the second icon R6b2. With such an arrangement, the operator can easily recognize which set value a displayed set value is by using the characters "A" and "B" and the second icon R6b2 as marks. Note that the second maximum engine rotation speed display area R2b is arranged below the first maximum engine rotation speed display area R2a.

The maximum vehicle speed operation areas R3 are arranged side by side in the left-right direction of the maximum vehicle speed display area R1. As described above, the maximum vehicle speed display areas R1 include the first maximum vehicle speed display area R1a and the second maximum vehicle speed display area R1b. The maximum vehicle speed operation areas R3 are arranged side by side in the left-right direction with respect to each of the first maximum vehicle speed display area R1a and the second maximum vehicle speed display area R1b. Specifically, the maximum vehicle speed operation areas R3 include a rectangular maximum vehicle speed reducing area R3a for decreasing a set value by a touch operation and a rectangular maximum vehicle speed increasing area R3b for increasing the set value by a touch operation. With respect to each of the first maximum vehicle speed display area R1a and the second maximum vehicle speed display area R1b, the maximum vehicle speed reducing area R3a is arranged on the left side, and the maximum vehicle speed increasing area R3b is arranged on the right side.

When a touch operation is performed on the maximum vehicle speed reducing area R3a arranged on the left side of the first maximum vehicle speed display area R1a, a set value in the first maximum vehicle speed display area R1a can be reduced. When a touch operation is performed on the maximum vehicle speed increasing area R3b arranged on the right side of the first maximum vehicle speed display area R1a, the set value in the first maximum vehicle speed display area R1a can be increased. When a touch operation is performed on the maximum vehicle speed reducing area R3a arranged on the left side of the second maximum vehicle speed display area R1b, a set value in the second maximum vehicle speed display area R1b can be reduced. When a touch operation is performed on the maximum vehicle speed increasing area R3b arranged on the right side of the second maximum vehicle speed display area R1b, the set value in the second maximum vehicle speed display area R1b can be increased.

The maximum engine rotation speed operation areas R4 are arranged side by side in the left-right direction of the maximum engine rotation speed display area R2. As described above, the maximum engine rotation speed display areas R2 include the first maximum engine rotation speed display area R2a and the second maximum engine rotation speed display area R2b. The maximum engine rotation speed operation areas R4 are arranged side by side in the left-right direction with respect to each of the first maximum engine rotation speed display area R2a and the second maximum engine rotation speed display area R2b. Specifically, the maximum engine rotation speed operation areas R4 include a rectangular maximum engine rotation speed reducing area R4a for decreasing a set value by a touch operation, and a rectangular maximum engine rotation speed increasing area R4b for increasing the set value by a touch operation. With respect to each of the first maximum engine rotation speed display area R2a and the second maximum engine rotation speed display area R2b, the maximum engine rotation speed reducing area R4a is arranged on the left side, and the maximum engine rotation speed increasing area R4b is arranged on the right side.

When a touch operation is performed on the maximum engine rotation speed reducing area R4a arranged on the left side of the first maximum engine rotation speed display area R2a, a set value in the first maximum engine rotation speed display area R2a can be reduced. When a touch operation is performed on the maximum engine rotation speed increasing area R4b arranged on the right side of the first maximum engine rotation speed display area R2a, the set value in the first maximum engine rotation speed display area R2a can be increased. When a touch operation is performed on the maximum engine rotation speed reducing area R4a arranged on the left side of the second maximum engine rotation speed display area R2b, a set value in the second maximum engine rotation speed display area R2b can be reduced. When a touch operation is performed on the maximum engine rotation speed increasing area R4b arranged on the right side of the second maximum engine rotation speed display area R2b, the set value in the second maximum engine rotation speed display area R2b can be increased.

In the present embodiment, as a preferable mode, the maximum vehicle speed operation area R3 and the maximum engine rotation speed operation area R4 display icons indicating a change mode of a set value. Specifically, a negative icon "-" representing reduction is displayed in the maximum vehicle speed reducing area R3a forming the maximum vehicle speed operation area R3, and a positive icon "+" representing increase is displayed in the maximum vehicle speed increasing area R3b. Similarly, the negative icon "-" representing reduction is displayed in the maximum engine rotation speed reducing area R4a forming the maximum engine rotation speed operation area R4, and the positive icon "+" representing increase is displayed in the maximum engine rotation speed increasing area R4b. As described above, the icons indicating (representing) the change modes are displayed in the respective operation areas R3 and R4, whereby an intuitive operation can be performed, and the operability of the operator can be improved. Note that the icons indicating increase and reduction are not limited to "+" and "-", and may be, for example, arrows or the like.

The setting target display area R8 is provided for each of the first maximum vehicle speed display area R1a, the second maximum vehicle speed display area R1b, the first maximum engine rotation speed display area R2a, and the second maximum engine rotation speed display area R2b. That is, four setting target display areas R8 are provided. The four setting target display areas R8 have the same shape, specifically, a horizontally long rectangular shape.

The first setting target display area R8a is provided so as to surround the first maximum vehicle speed display area R1a, and the maximum vehicle speed reducing area R3a and the maximum vehicle speed increasing area R3b which are provided on the left and the right of the first maximum vehicle speed display area R1a. The second setting target display area R8b is provided so as to surround the second maximum vehicle speed display area R1b, and the maximum vehicle speed reducing area R3a and the maximum vehicle speed increasing area R3b which are provided on the left and the right of the second maximum vehicle speed display area R1b. The third setting target display area R8c is provided so as to surround the first maximum engine rotation speed display area R2a, and the maximum engine rotation speed reducing area R4a and the maximum engine rotation speed increasing area R4b which are provided on the left and the right of the first maximum engine rotation speed display area R2a. The fourth setting target display area R8d is provided so as to surround the second maximum engine rotation speed display area R2b, and the maximum engine rotation speed reducing area R4a and the maximum engine rotation speed increasing area R4b which are provided on the left and the right of the second maximum engine rotation speed display area R2b.

A display mode of each of the setting target display areas R8a to R8d is different between the case of being selected as the target of the change operation and the case of being not selected. When each of the setting target display areas R8a to R8d is selected as the target of the set value change operation using the engine rotation/vehicle speed setting dial 43, a portion other than the display areas R1 and R2 of the set values and the operation areas R3 and R4 is filled. When the setting target display areas R8a to R8d are not selected as the target of the set value change operation using the engine rotation/vehicle speed setting dial 43, the setting target display areas R8a to R8d are not filled. In the example illustrated in Fig. 8, the first setting target display area R8a is filled, and the set value of the maximum vehicle speed in the A mode can be changed using the engine rotation/vehicle speed setting dial 43.

When the touch panel TP is used, the setting of an item for which the setting target display area R8 is not filled can be changed using the operation areas R3 and R4.

The A/B automatic switching selection area R9 is an area in which enabling and disabling of A/B automatic switching for automatically switching between the A mode and the B mode can be selected. Here, it is assumed that the A mode is used as a travel mode at the time of work, and the B mode is used as a travel mode at the time of turning. When the A/B automatic switching is set to be enabled, for example, the automatic switching between the A mode and the B mode is performed by detecting lifting and lowering of the work implement 12. The lifting and lowering of the work implement 12 is detected based on, for example, an operation on a work implement lifting/lowering switch. When the work implement 12 is lifted from a state where the work vehicle 1 is performing working travel, the A/B automatic switching is activated so that the travel mode is automatically switched from the A mode to the B mode. In addition, when the work vehicle 1 finishes turning travel and the work implement 12 is lowered, the A/B automatic switching is activated so that the travel mode is automatically switched from the B mode to the A mode.

Whether the work vehicle 1 shifts from the working travel to the turning travel or shifts from the turning travel to the working travel may be detected using the steering angle of the steering wheel 16b. In addition, in the present embodiment, when the A/B automatic switching is executed, a screen for displaying the settings of the maximum vehicle speed and the maximum engine rotation speed is displayed in an interrupting manner on the center display 51d and the touch panel TP. The screen illustrated in Fig. 7 is displayed on the center display 51d. In addition, the setting confirmation screen S1 is displayed on the touch panel TP.

The A/B automatic switching selection area R9 is provided below the setting target display area R8 on the setting confirmation screen S1. In the example illustrated in Fig. 8, the A/B automatic switching selection area R9 includes a rectangular area R9a extending in the left-right direction and a circular area R9b arranged in the rectangular area R9a. It is possible to switch between enabling and disabling of the A/B automatic switching by moving the circular area R9b to the left and the right in the rectangular area R9a by a touch operation. In the example illustrated in Fig. 8, when the circular area R9b is arranged on the right side of the rectangular area R9a, the A/B automatic switching is enabled. That is, Fig. 8 illustrates a screen state in a case where the operator selects enabling of the A/B automatic switching. On the other hand, when the circular area R9b is arranged on the left side of the rectangular area R9a, the A/B automatic switching is disabled.

In the example illustrated in Fig. 8, when the circular area R9b is arranged at a position where enabling of the A/B automatic switching is selected, the rectangular area R9a is filled. On the other hand, when the circular area R9b is arranged at a position where disabling of the A/B automatic switching is selected, the rectangular area R9a is not filled. With this configuration, the operator can immediately determine which one of enabling and disabling the A/B automatic switching is set.

As can be seen from the above, in the present embodiment, an automatic switching necessity selection area (A/B automatic switching selection area R9) for allowing selection of necessity of automatic switching between a first travel mode (the A mode) and a second travel mode (the B mode) is displayed on the setting confirmation screen S1. With such a configuration, whether or not to use the automatic switching of the travel mode can be easily determined in accordance with a preference of the operator, which is convenient for the operator.

The caution display area R10 is an area where a caution in a case where the A/B automatic switching is enabled is displayed in characters. In the example illustrated in Fig. 8, a caution in a case where the set value of the maximum vehicle speed in the B mode is set to be higher than the set value of the maximum vehicle speed in the A mode is displayed as the caution. Specifically, when the set value of the maximum vehicle speed in the B mode is set higher than the set value of the maximum vehicle speed in the A mode, a caution indicating display of a confirmation screen before execution of the automatic switching is displayed.

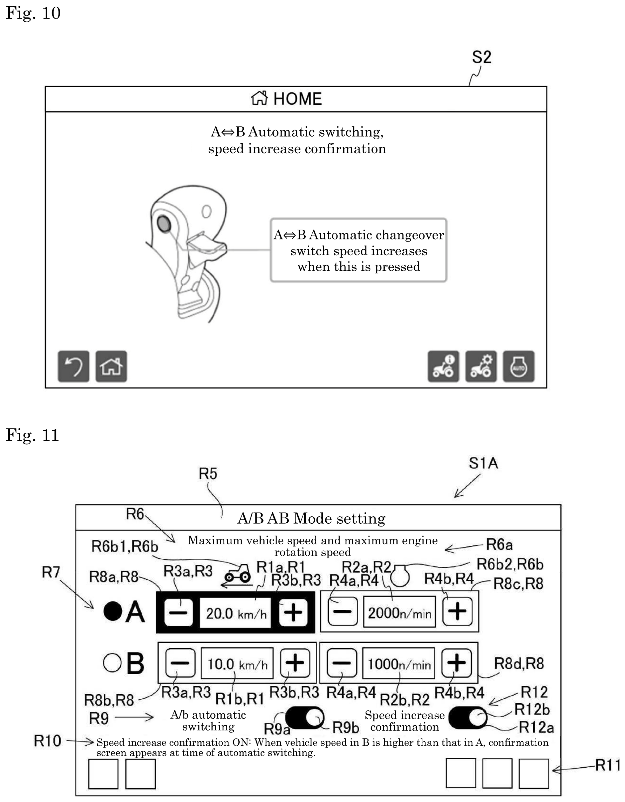

Fig. 10 is a view illustrating an example of a confirmation screen S2 displayed before the A/B automatic switching is executed. Specifically, when an automatic switching condition from the A mode to the B mode is satisfied and the set value of the maximum vehicle speed in the B mode is set higher than the set value of the maximum vehicle speed in the A mode, the confirmation screen S2 is displayed in an interrupting manner on the touch panel TP. As illustrated in Fig. 10, switching from the A mode to the B mode is not performed unless the operator presses the A/B changeover switch 41. That is, the A mode is maintained unless the operator presses the A/B changeover switch 41. When the operator presses the A/B changeover switch 41, the switching from the A mode to the B mode is performed, and the touch panel TP returns to a state before the confirmation screen S2 is displayed. With such a configuration, it is possible to prevent the automatic switching of the travel mode in a state where the operator does not recognize that there is a possibility that the speed is increased by an automatic change of the travel mode at the time of shifting from the working travel to the turning travel. That is, the safety of the work vehicle 1 can be improved.

The screen switching icon display area R11 is provided such that switching from the setting confirmation screen S1 to another screen can be easily performed. The screen switching icon display area R11 is provided below the caution display area R10 and at a lower end of the setting confirmation screen S1. In the screen switching icon display area R11, for example, a plurality of areas in which an icon imitating the home screen and the like are displayed are arranged in the left-right direction. When the area in which an icon is displayed is touched, the screen of the touch panel TP is switched to a screen corresponding to the touched icon.

### [2-3. Modification]

Fig. 11 is a view illustrating a setting confirmation screen S1A according to a modification displayed on the touch panel TP. In the setting confirmation screen S1A according to the modification, a speed increase confirmation selection area R12 that is not included in the setting confirmation screen S1 (see Fig. 8) according to the above-described embodiment is displayed.

The speed increase confirmation selection area R12 is an area in which whether or not to perform speed increase confirmation can be selected when the A/B automatic switching is set to be enabled. In a case where the speed increase confirmation is performed, the confirmation screen S2 (see Fig. 10) is displayed similarly to the above-described embodiment. Hereinafter, the confirmation screen S2 may be expressed as the speed increase confirmation screen S2. The speed increase confirmation selection area R12 is provided on the right side of the A/B automatic switching selection area R9. The speed increase confirmation selection area R12 has the same configuration as the A/B automatic switching selection area R9, and includes a rectangular area R12a extending in the left-right direction and a circular area R12b arranged in the rectangular area R12a. It is possible to switch whether or not to perform the speed increase confirmation by moving the circular area R12b to the left and the right in the rectangular area R12a by a touch operation.

Note that the speed increase confirmation selection area R12 is necessary only when the A/B automatic switching is set to be enabled. For this reason, when the A/B automatic switching is set to be disabled, the speed increase confirmation selection area R12 becomes inoperable. When it is inoperable, it is preferable to notify the operator of this fact, and the speed increase confirmation selection area R12 may be grayed out.

Fig. 11 illustrates a state where it is selected to perform the speed increase confirmation using the speed increase confirmation selection area R12. In this case, similarly to the above-described embodiment, when the automatic switching condition from the A mode to the B mode is satisfied and the set value of the maximum vehicle speed of the B mode is set higher than the set value of the maximum vehicle speed of the A mode, the speed increase confirmation screen S2 (see Fig. 10) is displayed. When the speed increase confirmation screen S2 is displayed, the switching from the A mode to the B mode is not performed unless the operator presses the A/B changeover switch 41 as described above. That is, in a state where it is selected to perform the speed increase confirmation, the travel mode control unit 22 (see Fig. 2) executes confirmation request processing of requesting the operator to perform a confirmation operation using the A/B changeover switch 41. On the other hand, when the operator moves the circular area R12b in the speed increase confirmation selection area R12 to the left side from the state illustrated in Fig. 11, it is selected not to perform the speed increase confirmation. In this case, even when the set value of the maximum vehicle speed in the B mode is set higher than the set value of the maximum vehicle speed in the A mode, the A mode is automatically switched to the B mode without displaying the speed increase confirmation screen S2. That is, in a state where it is selected not to perform the speed increase confirmation, the travel mode control unit 22 does not execute the confirmation request processing of requesting the confirmation operation (an operation on the A/B changeover switch 41) by the display of the speed increase confirmation screen S2.

As can be seen from the above, in the present modification, when automatic switching (the A/B automatic switching) is selected, a confirmation necessity selection area (the speed increase confirmation selection area R12) is displayed on the setting confirmation screen S1. The confirmation necessity selection area (the speed increase confirmation selection area R12) allows selection of necessity of confirmation request processing of requesting a confirmation operation from an operator (user) before the automatic switching in accordance with a relationship of a set value of a maximum vehicle speed between a first travel mode (A mode) and a second travel mode (B mode). With such a configuration, it is possible to reduce the possibility that an operator who is familiar with how to use the work vehicle 1 feels bothersome to display and an operation required for the display.

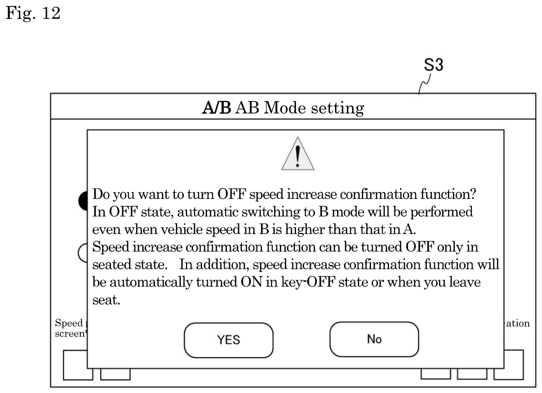

In the present modification, as a preferable mode, when it is selected not to perform the speed increase confirmation (speed increase confirmation is turned off) in the speed increase confirmation selection area R12, a re-confirmation screen S3 as illustrated in Fig. 12 is displayed. Note that Fig. 12 is a view illustrating a configuration of the re-confirmation screen S3 displayed when it is selected not to perform the speed increase confirmation.

The re-confirmation screen S3 displays cautions in a case where the speed increase confirmation is not performed, and requests the operator to understand and approve the points to note. The operator cannot turn off a speed increase confirmation function unless approving the points to note displayed on the re-confirmation screen S3. The re-confirmation screen S3 includes selection areas (portions displaying "YES" and "NO" in the drawing) for selecting whether or not to turn off the speed increase confirmation function in addition to the points to note. Touching "Yes" in the selection area corresponds to the above approval.

In the present modification, the points to note include the following two points. A first point to note is that the speed increase confirmation function can be turned off only when the operator is seated. That is, the operator cannot select "YES" on the re-confirmation screen S3 unless being seated on the driver's seat 16a. A second point to note is that the speed increase confirmation function is automatically turned on when the work vehicle 1 is keyed off or the operator leaves the driver's seat 16a. That is, even when the speed increase confirmation function is turned off once, the speed increase confirmation function is automatically turned on when the operator leaves the seat or in the key-off state. With this configuration, when the operator of the work vehicle 1 is changed to another person, the speed increase confirmation function is always automatically turned on, so that it is possible to prevent a situation in which the speed increase confirmation function is turned off without the operator's knowledge.

Seating and leaving of the operator (user) with respect to the driver's seat 16a are detected using a sensor such as a seat switch, for example. The seat switch is included in, for example, the sensor 3 illustrated in Fig. 2. For example, seating of the operator is detected when the seat switch is turned on, and leaving of the operator is detected when the seat switch is off. In the work vehicle 1, the following configuration may be adopted using such a seat switch. A configuration may be adopted in which, after it is selected that the confirmation request processing is unnecessary by the confirmation necessity selection area (the speed increase confirmation selection area R12), switching to a setting requiring the confirmation request processing is performed when it is detected that the state of the operator (user) has changed from seating to leaving. When such a configuration is adopted, in a case where the operator who does not need the confirmation request processing (has disabled the speed increase confirmation function) is changed to another operator, it is possible to prevent a situation in which the speed of the work vehicle 1 is unexpectedly increased without performing the speed increase confirmation during driving on the assumption that the speed increase confirmation is to be performed.

### <3. Notes, etc.>

Various changes can be made to various technical features disclosed herein without departing from the spirit of the technical creation. In addition, a plurality of embodiments, examples, and modifications described herein may be implemented in combination to the extent possible.

### <4. Supplementary note>

The following supplementary notes are further disclosed regarding the embodiments, examples, and modifications described above.

An exemplary work vehicle of the present invention may be a work vehicle having a configuration (first configuration) in which a display device is provided, the display device is capable of displaying a setting confirmation screen in which a maximum vehicle speed display area for displaying a set value of a maximum vehicle speed and a maximum engine rotation speed display area for displaying a set value of a maximum engine rotation speed are displayed side by side, and the setting confirmation screen includes a maximum vehicle speed operation area which is displayed side by side with the maximum vehicle speed display area and enables a change of the set value of the maximum vehicle speed, and a maximum engine rotation speed operation area which is displayed side by side with the maximum engine rotation speed display area and enables a change of the set value of the maximum engine rotation speed.

The work vehicle having the first configuration may have a configuration (second configuration) in which a plurality of travel modes in which combinations of the set value of the maximum vehicle speed and the set value of the maximum engine rotation speed are different from each other are settable, and, on the setting confirmation screen, the maximum vehicle speed display area, the maximum engine rotation speed display area, the maximum vehicle speed operation area, and the maximum engine rotation speed operation area are displayed for each of the plurality of travel modes.

The work vehicle having the first or second configuration may have a configuration (third configuration) in which the setting confirmation screen is displayable by a screen transition operation of the display device.

The work vehicle having any one of the first to third configurations may have a configuration (fourth configuration) in which an operation member that causes the setting confirmation screen to be displayed is further provided.

The work vehicle having the fourth configuration may have a configuration (fifth configuration) in which the operation member is arranged on a side of a driver's seat.

The work vehicle having the fourth or fifth configuration may have a configuration (sixth configuration) in which the set value of the maximum vehicle speed and the set value of the maximum engine rotation speed are changeable using the operation member.

The work vehicle having any one of the fourth to sixth configurations may have a configuration (seventh configuration) in which, when neither the operation member nor the display device is operated for a predetermined time or more after the setting confirmation screen is displayed, the display device displays a screen displayed before the setting confirmation screen is displayed.

The work vehicle having any one of the first to seventh configurations may have a configuration (eighth configuration) in which each of the maximum vehicle speed operation area and the maximum engine rotation speed operation area displays an icon indicating a change mode of the set value.

The work vehicle having the second configuration may have a configuration (ninth configuration) in which the plurality of travel modes include a first travel mode and a second travel mode, and an automatic switching necessity selection area that allows selection of necessity of automatic switching between the first travel mode and the second travel mode is displayed on the setting confirmation screen.

The work vehicle having the ninth configuration may have a configuration (tenth configuration) in which, when the automatic switching is selected, a confirmation necessity selection area, which allows selection of necessity of confirmation request processing of requesting a user to perform a confirmation operation before the automatic switching according to a relationship of the set value of the maximum vehicle speed between the first travel mode and the second travel mode, is displayed on the setting confirmation screen.

The work vehicle having the tenth configuration may have a configuration (eleventh configuration) in which a sensor that detects seating and leaving of the user with respect to the driver's seat is further provided, and switching to a setting requiring the confirmation request processing is performed when it is detected that a state of the user has changed from the sitting to the leaving after it is selected that the confirmation request processing is unnecessary by the confirmation necessity selection area.

### LIST OF REFERENCE SIGNS

- 1: Work vehicle
- 16a: Driver's seat
- 41: A/B changeover switch (operation member)
- 42: Engine rotation/vehicle speed changeover switch (operation member)
- 43: Engine rotation/vehicle speed setting dial (operation member)
- R1: Maximum vehicle speed display area
- R1a: First maximum vehicle speed display area
- R1b: First maximum vehicle speed display area
- R2: Maximum engine rotation speed display area
- R2a: First maximum engine rotation speed display area
- R2b: Second maximum engine rotation speed display area
- R3: Maximum vehicle speed operation area
- R3a: Maximum vehicle speed reducing area
- R3b: Maximum vehicle speed increasing area
- R4: Maximum engine rotation speed operation area
- R4a: Maximum engine rotation speed reducing area
- R4b: Maximum engine rotation speed increasing area
- R9: A/B automatic switching selection area (automatic switching necessity selection area)
- R12: Speed increase confirmation selection area (confirmation screen necessity selection area)
- S1, S1A: Setting confirmation screen
- S2: Speed increase confirmation screen (confirmation screen)
- TP: Touch panel (display device)

## Claims

1. A work vehicle comprising a display device, wherein
the display device is capable of displaying a setting confirmation screen in which a maximum vehicle speed display area for displaying a set value of a maximum vehicle speed and a maximum engine rotation speed display area for displaying a set value of a maximum engine rotation speed are displayed side by side, and
the setting confirmation screen includes
a maximum vehicle speed operation area which is displayed side by side with the maximum vehicle speed display area and enables a change of the set value of the maximum vehicle speed, and
a maximum engine rotation speed operation area which is displayed side by side with the maximum engine rotation speed display area and enables a change of the set value of the maximum engine rotation speed.

2. The work vehicle according to claim 1, wherein
a plurality of travel modes in which combinations of the set value of the maximum vehicle speed and the set value of the maximum engine rotation speed are different from each other are settable, and
on the setting confirmation screen, the maximum vehicle speed display area, the maximum engine rotation speed display area, the maximum vehicle speed operation area, and the maximum engine rotation speed operation area are displayed for each of the plurality of travel modes.

3. The work vehicle according to claim **1,** wherein the setting confirmation screen is displayable by a screen transition operation of the display device.

4. The work vehicle according to claim 1, further comprising an operation member that causes the setting confirmation screen to be displayed.

5. The work vehicle according to claim 4, wherein the operation member is arranged on a side of a driver's seat.

6. The work vehicle according to claim 5, wherein the set value of the maximum vehicle speed and the set value of the maximum engine rotation speed are changeable using the operation member.

7. The work vehicle according to claim 4, wherein, when neither the operation member nor the display device is operated for a predetermined time or more after the setting confirmation screen is displayed, the display device displays a screen displayed before the setting confirmation screen is displayed.

8. The work vehicle according to any one of claims 1 to 7, wherein each of the maximum vehicle speed operation area and the maximum engine rotation speed operation area displays an icon indicating a change mode of the set value.

9. The work vehicle according to claim 2, wherein
the plurality of travel modes include a first travel mode and a second travel mode, and
an automatic switching necessity selection area that allows selection of necessity of automatic switching between the first travel mode and the second travel mode is displayed on the setting confirmation screen.

10. The work vehicle according to claim 9, wherein, when the automatic switching is selected, a confirmation necessity selection area, which allows selection of necessity of confirmation request processing of requesting a user to perform a confirmation operation before the automatic switching according to a relationship of the set value of the maximum vehicle speed between the first travel mode and the second travel mode, is displayed on the setting confirmation screen.

11. The work vehicle according to claim 10, further comprising a sensor that detects seating and leaving of the user with respect to the driver's seat, wherein
switching to a setting requiring the confirmation request processing is performed when it is detected that a state of the user has changed from the sitting to the leaving after it is selected that the confirmation request processing is unnecessary by the confirmation necessity selection area.
